# EUROPEAN PATENT SPECIFICATION

(11) **EP 3 267 686 B1**
(45) Date of publication and mention of the grant of the patent: **04.09.2019**
(21) Application number: 16758459.8
(22) Date of filing: 29.02.2016
(51) Int. Cl.: H04N 21/218, H04N 21/234, H04N 21/239, H04N 21/238, H04N 19/40, H04N 21/2343, H04N 21/845, H04N 21/8547, A63F 13/86

(54) **VIDEO SOURCE ACCESS METHOD AND DEVICE**
VERFAHREN UND VORRICHTUNG FÜR DEN ZUGRIFF AUF EINE VIDEOQUELLE
PROCÉDÉ ET DISPOSITIF D'ACCÈS À UNE SOURCE VIDÉO

(30) Priority: 03.03.2015 CN 201510094882
(43) Date of publication of application: 10.01.2018
(73) Proprietor: Tencent Technology (Shenzhen) Company Limited, Shenzhen, Guangdong 518000 (CN)
(72) Inventor: ZHONG, Cancheng, Shenzhen Guangdong 518000 (CN)
(74) Representative: Eisenführ Speiser
(86) International application number: PCT/CN2016/074820
(87) International publication number: WO 2016/138843

(56) References cited:
- WO-A1-2015/002582
- CN-A- 101 521 820
- CN-A- 101 808 233
- CN-A- 102 474 504
- CN-A- 102 883 216
- CN-A- 104 639 949
- CN-A- 104 735 426
- CN-U- 202 135 269
- US-A1- 2001 008 574
- US-A1- 2010 281 042
- US-A1- 2014 351 318

## Description

### TECHNICAL FIELD

The present disclosure relates to the field of video data processing, and in particular to a video source access method and a device thereof.

### BACKGROUND

With the development of video service, various service devices into which a video source is inputted should have an access function of supporting video source in various formats. Moreover, the formats of the video source are updated frequently, and hence, in order to be compatible with the video sources in various formats, the service device should modify internal processing logic continually. For example, when a video source in a new format arrives, the service device needs to modify its processing logic to be compatible with the video source in the new format.

Since the internal processing logic of the service device is adjusted continually, the maintenance of the service device by the staff is more and more difficult. More seriously, it may result in that core business of the service device is unstable since the internal processing logic of the service device is modified continually, and meanwhile it is also not beneficial to develop the core service.

### SUMMARY

In view of this, a video source access method and a device thereof are provided in embodiments of the present disclosure. The method includes acquiring an address identifier of a video source supporting a certain format. The video source includes video data in the format carrying a timestamp. The method further includes acquiring, based on the address identifier, the video data in an ascending order of the timestamp carried in the video data. The method further includes converting the video data from the format into a preset common video format to obtain the video data in the common video format. The method further includes inputting the video data in the common video format to a service device to achieve an access to the video source. The service device is configured to store and manage the video data in the common video format, and provide, when a content distribution network server receives a video request from a user, the video data in the common video format to the user via the content distribution network server. The scope of the invention is defined by the appended claims.

Preferably, the method may further include sending a starting video transmission request to the service device. The inputting the video data in the common video format to the service device may include inputting the video data in the common video format to the service device in an ascending order of the timestamp upon reception of a starting video response returned by the service device.

Preferably, the method may further include detecting an availability of the video source based on the address identifier, and sending a pausing video transmission notification to the service device in a case that it is detected that the video source is unavailable.

Preferably, the method may further include detecting an availability of the video source based on the address identifier, and reacquiring the video data in the video source based on the address identifier after a preset time duration in a case that it is detected that the video source is unavailable.

Preferably, an ending video transmission notification may be sent to the service device when an ending video transmission signal is received or after video data in the common video format in the video source which carries a maximum time stamp is inputted to the service device.

Preferably, the method may further include assigning a unique video identifier to the video source.

Preferably, the method may further include setting a communication protocol, and inputting the video data in the common video format to the service device in accordance with the communication protocol.

Preferably, the method may further include sending an acquiring video data request to the video source after the address identifier of the video source is obtained.

Preferably, the method may further include separating audio data from the obtained video data, and inputting the audio data to an audio server.

Preferably, the service device may include at least one of a video server, a video transcoding server or a video confluence server.

A video source access device is further provided in embodiments of the present disclosure, which includes a first acquiring module, a second acquiring module, a converting module and an inputting module. The first acquiring module is configured to acquire an address identifier of a video source supporting a certain format. The video source includes video data in the format carrying a timestamp. The second acquiring module is configured to acquire, based on the address identifier, the video data in an ascending order of the timestamp carried in the video data. The converting module is configured to convert the video data from the format into a preset common video format to obtain the video data in the common video format. The inputting module is configured to input the video data in the common video format to a service device to achieve an access to the video source. The service device is configured to store and manage the video data in the common video format, and provide, when a content distribution network server receives a video request from a user, the video data in the common video format to the user via the content distribution network server.

Preferably, the device may further include a first sending module configured to send a turn-on video transmission request to the service device. The inputting module is further configured to input the video data in the common video format to the service device in an ascending order of the timestamp upon reception of a starting video response returned by the service device.

Preferably, the device may further include a first detecting module and a second sending module. The first detecting module is configured to detect an availability of the video source based on the address identifier. The second sending module is configured to send a pausing video transmission notification to the service device in a case that it is detected that the video source is unavailable.

Preferably, the device may further include a second detecting module and a third acquiring module. The second detecting module is configured to detect an availability of the video source based on the address identifier. The third acquiring module is configured to reacquire the video data in the video source based on the address identifier after a preset time duration in a case that it is detected that the video source is unavailable.

Preferably, the device may further include a third sending module. The third sending module is configured to send an ending video transmission notification to the service device when an ending video transmission signal is received or after video data in the common video format in the video source which carries a maximum time stamp is inputted to the service device.

In embodiments of the present disclosure, an address identifier of a video source supporting a certain format is obtained. The video source includes video data in the format carrying a timestamp. The video data is obtained in an ascending order of the timestamp carried in the video data based on the address identifier. The video data is converted from the format into a preset common video format to obtain the video data in the common video format. The video data in the common video format is inputted to a service device which has a requirement for an access to the video source. Compared with the conventional technology, in the present disclosure, the video source are converted from multiple formats into a common format without modifying a processing logic of the service device, the identifiable video data in the common format is provided to the service device, and access to the video source supporting various formats is achieved.

### BRIEF DESCRIPTION OF THE DRAWINGS

In order to illustrate technical solutions in embodiments of the invention or in the conventional technology more clearly, drawings used in the description of the embodiments or the conventional technology are introduced briefly hereinafter. Apparently, the drawings described hereinafter merely illustrate some embodiments of the invention, and other drawings may be obtained by those skilled in the art based on these drawings without any creative efforts.
Figure 1 is a flowchart of a video source access method according to the present disclosure;
Figure 2 is an interaction diagram of a video source access method applied to a big network game competition broadcasting according to the present disclosure;
Figure 3 is a schematic structural diagram of a video source access device according to the present disclosure;
Figure 4(a) is a deployment structural diagram of the video source access device according to a device embodiment of the present disclosure;
Figure 4(b) is a deployment structural diagram of the video source access device according to a device embodiment of the present disclosure; and
Figure 5 is a schematic structural diagram of a part of a server according to the present disclosure.

### DETAILED DESCRIPTION OF THE EMBODIMENTS

Technical solutions according to embodiments of the present disclosure are described clearly and completely in conjunction with the drawings in the embodiments of the present disclosure hereinafter. Apparently, the described embodiments are only a few rather than all of the embodiments of the present disclosure. Other embodiments obtained by those skilled in the art without any creative work based on the embodiments of the present disclosure fall into the scope of protection of the present disclosure.

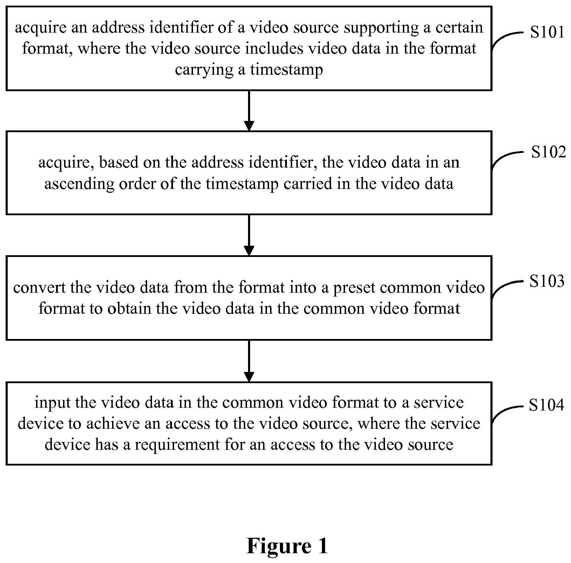

Reference is made to Figure 1, which is a flowchart of a video source access method according to an embodiment of the present disclosure. Specifically, the method may include steps S101 to S104.

In step S101, an address identifier of a video source supporting a certain format is obtained. The video source includes video data in the format carrying a timestamp.

In the embodiment, the video source access method may be applied to a video access server. The video access server may communicate with the service device according to a preset communication protocol. The service device mentioned in the embodiment may be considered as a video server, a video transcoding server or a video confluence server or the like, which has a requirement for an access to the video source.

The video source may include video data for live broadcasting, or a video file. In a word, the video source includes video data carrying a timestamp. The video access server may send an acquiring video data request to the video source upon reception of the address identifier of the video source.

It is to be noted that, the video source may support a video format such as flv, rtmp, and TS. Further, a new video format occurring with the development of video service may also be compatible with the video access server according to the present disclosure.

In step S102, the video data is obtained in an ascending order of the timestamp carried in the video data based on the address identifier.

In the embodiment, a correspondence between the video source and the address identifier is preconfigured by the video access server. That is, video data in the video source corresponding to the address identifier may be pulled actively based on the address identifier. The address identifier may be a uniform resource locator (URL address) and the like. For example, in a case that the address identifier is the uniform resource locator (URL address), the video access server may pull video data in the video source corresponding to the URL address based on the URL address.

Since the video data in the video source carries the timestamp, it indicates that the video data has a time order. Hence, in the embodiment, the video data in the video source is pulled in an ascending order of the timestamp, that is, video data with the timestamp indicated to be earlier in time is firstly pulled.

In step S103, the video data is converted from the format into a preset common video format to obtain the video data in the common video format.

In the embodiment, after the video data is obtained by the video access server, the video access server converts the video data from the format to a preset common video format, to obtain finally the video data in the common video format, so that the service device can read the video data directly.

In addition, to meet the requirement of the service device for a code rate and resolution of the video data, in the embodiment, the service device may also include a transcoding server, and the video access server may input the video data in the common video format to the transcoding server for transcoding. Alternatively, the service device may further include a confluence server, and the video access server may input the video data in the common video format to the confluence server for confluence.

In addition, to meet the requirement of some audio servers for audio data in the video source, in the embodiment, audio data may be separated from the video data and inputted to the audio server, after the video data is obtained.

In step S104, the video data in the common video format is inputted to a service device to achieve an access to the video source, where the service device has a requirement for an access to the video source.

In the embodiment, a communication protocol is preset between the video access server and the service device, and data interaction between the video access server and the service device is realized according to the communication protocol.

In practice, before inputting video data in the common video format in the video source which carries a minimum time stamp to the service device, the video access server firstly sends a starting video transmission request to the service device to notify the service device that there exists a video source to access to. After locally allocating channel resource to the video source, the service device returns a starting video response. Upon reception of the starting video response returned by the service, the video access server firstly sends the video data in the common video format in the video source which carries the minimum time stamp to the service device. Then the video access server sends video data in the common video format to the service device in an ascending order of the timestamp carried in the video data.

After inputting the video data in the common video format in the video source which carries the maximum time stamp to the service device, the video access server sends an ending video transmission notification to the service device to notify the service device that the video source transmission has ended.

Upon reception of an ending video transmission signal from a third-party device to which the video source belongs, the video access server sends the ending video transmission notification to the service device to notify the service device that the video source transmission has ended.

In addition, the video access server may further detect an availability of the video source based on the address identifier of the video source at a frequency corresponding to a preset time duration. For example, it is detected whether the video data in the video source transmitted to the video access server is interrupted. The video access server sends a pausing video transmission notification to the service device to notify the service device to pause reception of the video data in a case that it is detected by the video access server that the video source is unavailable. The video access server may further reacquire the video data in the video source based on the address identifier after the preset time duration. The video access server continues video transmission to the service device in a case that the video access server gets the video data in the video source again after the interruption.

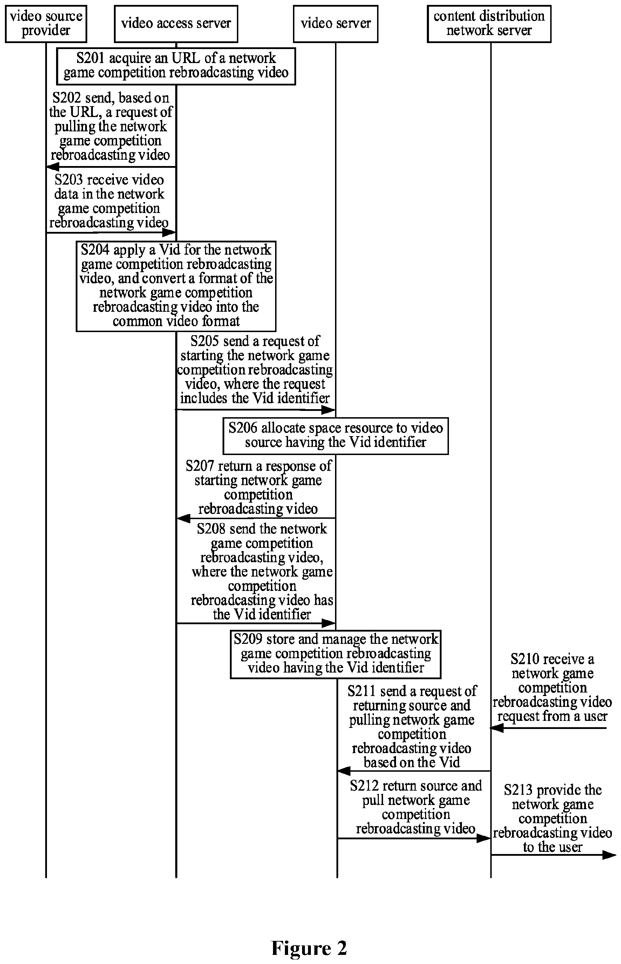

According to an optional embodiment of the present disclosure, the video access server may assign a unique video identifier (Vid) to the obtained video data. Upon reception of the video data, the service device manages and caches the received video data based on the video identifier, and a content distribution network server acquires the video data from the service device based on the video identifier. A communication protocol between the video access server and the service device may be preset. The protocol may include starting, transmission and ending of the video, and video data in different video sources are distinguished based on the Vid. Reference is made to Figure 2, which is an interaction diagram of a video source access method applied to a big network game competition broadcasting according to an embodiment of the present disclosure. Specifically, the method includes steps S201 to S213.

In step S201, the video access server acquires a URL of the network game competition rebroadcasting video. The URL of the network game competition rebroadcasting video may be obtained in many ways.

Taking rebroadcasting of finals of Korea OGN Summer Season Tournament as an example in the embodiment of the present disclosure, the company may post a team to Korea for performing direct broadcasting satellite. The satellite signal is transmitted to China to generate a RTMP video stream as a video source for broadcasting. The video access server may acquire a URL of the RTMP video stream in advance.

In step S202, the video access server sends a request of pulling the network game competition rebroadcasting video to a video provider based on the URL.

In step S203, the video provider sends video data in the network game competition rebroadcasting video to the video access server upon reception of the request. The video data carries a timestamp.

In step S204, the video access server applies a Vid for the network game competition rebroadcasting video, and converts a format of the network game competition rebroadcasting video into the common video format.

In addition, the video access server may further separate the network game competition rebroadcasting video into two parts of video data and audio data by using software such as ffmpeg, input the video data to a video server, and input the audio data to an audio server. The video data is sent to a transcoding server for transcoding in a case that there is a requirement for a code rate and resolution in match rebroadcasting.

In step S205, the video access server sends a request of starting the network game competition rebroadcasting video to the video server. The request includes a Vid identifier of the network game competition rebroadcasting video.

In step S206, the video server allocates space resource to video source having the Vid identifier upon reception of the request.

In step S207, after allocating the space resource to the video source having the Vid, the video server returns a response of starting network game competition rebroadcasting video to the video access server to notify the video access server to start to transmit the network game competition rebroadcasting video.

In step S208, the video access server sends the network game competition rebroadcasting video to the video server. The network game competition rebroadcasting video has the Vid identifier.

In step S209, the video server stores and manages the network game competition rebroadcasting video having the Vid identifier.

In step S210, a content distribution network server (CDN) receives a network game competition rebroadcasting video request from a user.

In practice, when the user wants to watch a video, a device of the user is firstly connected to a nearest CDN server, and the CDN server checks whether the video source is cached locally. If the video source is not in a local cache, the CDN server requests a returning source server for an address of the video server where the video source is located and requests the video server for video data in the video source.

In step S211, a request of returning source and pulling network game competition rebroadcasting video is sent to the video server based on the Vid of the video source requested by the user.

In step S212, a requirement of the CDN server for returning source and pulling network game competition rebroadcasting video is met upon reception of the request by the video server.

In step S213, the CDN server provides the network game competition rebroadcasting video to the user after the video data in the network game competition rebroadcasting video is pulled by the CDN server.

In addition, the video access server may detect an availability of the video source provided by the video provider periodically, send an alarm when it is found that video data is interrupted, and reconnect the video source from the video provider.

In embodiments of the present disclosure, an address identifier of a video source in any format is obtained in advance. The video source includes video data in the format carrying a timestamp; the video data is obtained in an ascending order of the timestamp carried in the video data based on the address identifier. The video data is converted from the format into a preset common video format to obtain the video data in the common video format. The video data in the common video format is inputted to a service device which has a requirement for an access to the video source. Compared with the conventional technology, in the present disclosure, the video source are converted from multiple formats into a common format without modifying a processing logic of the service device, the identifiable video data in the common format is provided to the service device, and access to the video source supporting various formats is achieved.

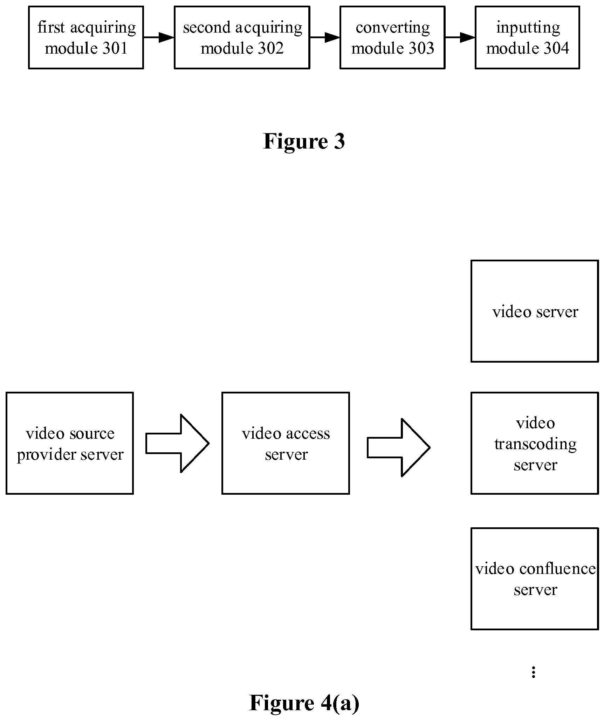

Reference is made to Figure 3, which is a schematic structural diagram of a video source access device according to a device embodiment of the present disclosure. The device may include a first acquiring module 301, a second acquiring module 302, a converting module 303 and an inputting module 304.

The first acquiring module 301 is configured to acquire an address identifier of a video source supporting a certain format. The video source includes video data in the format carrying a timestamp.

The second acquiring module 302 is configured to acquire, based on the address identifier, the video data in an ascending order of the timestamp carried in the video data.

The converting module 303 is configured to convert the video data from the format into a preset common video format to obtain the video data in the common video format.

The inputting module 304 is configured to input the video data in the common video format to a service device to achieve an access to the video source, where the service device has a requirement for an access to the video source.

To realize the communication protocol between the device and the service device, the device further includes a first sending module configured to send a turn-on video transmission request to the service device.

The inputting module is further configured to input the video data in the common video format to the service device in an ascending order of the timestamp upon reception of a starting video response returned by the service device.

In addition, the device further includes a first detecting module and a second sending module.

The first detecting module is configured to detect an availability of the video source based on the address identifier.

The second sending module is configured to send a pausing video transmission notification to the service device in a case that it is detected that the video source is unavailable.

In addition, the device further includes a second detecting module and a third acquiring module.

The second detecting module is configured to detect an availability of the video source based on the address identifier.

The third acquiring module is configured to reacquire the video data in the video source based on the address identifier after a preset time duration in a case that it is detected that the video source is unavailable.

To notify the service device to end a video inputting operation, the device further includes a third sending module. The third sending module is configured to send an ending video transmission notification to the service device when an ending video transmission signal is received or after video data in the common video format in the video source which carries a maximum time stamp is inputted to the service device.

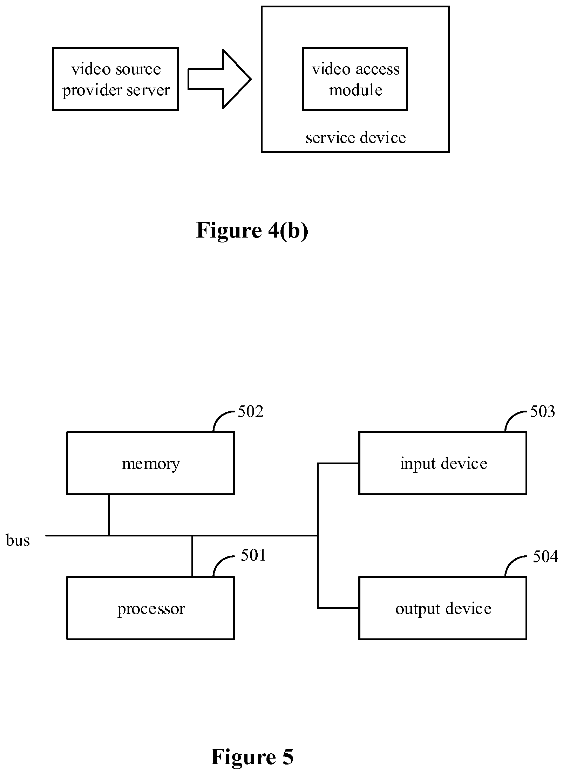

Reference is made to Figure 4(a) and Figure 4(b), which are deployment structural diagrams of video source access devices according to device embodiments of the present disclosure. Figure 4(a) shows that the device may be implemented as an independent video access server, where the video access server may communicate with a service device such as a video server, a video transcoding server and a video confluence server. Figure 4(b) shows that the device may also be implemented as an independent video access module and integrated into the service device, without affecting internal service logic of the service device.

Correspondingly, a server is provided according to an embodiment of the present disclosure. As shown in Figure 5, the server can include a processor 501, a memory 502, an input device 503 and an output device 504.

The number of the processor 501 in the video access server in the embodiment of the present disclosure may be one or more, taking one processor as an example in Figure 5. In some embodiments of the present disclosure, the processor 501, the memory 502, the input device 503 and the output device 504 may be connected via a bus or by other means, taking bus connection as an example in Figure 5.

The memory 502 may be used to store software program and a module. The processor 501 executes various function applications and data processing of the video access server by running the software program and the module stored in the memory 502. The memory 502 may mainly include a program storage area and a data storage area. The program storage area may store an operation system, an application program required for at least one function and the like. The memory 502 may include a high-speed random access memory, and may further include a non-volatile memory, such as at least one disk storage device, a flash device or other volatile solid-state storage device. The input device 503 may be used to receive video data in the video source and the like.

Specifically, in the embodiment, the processor 501 may load one or more executable files corresponding to courses of application programs to the memory 502 and run the application program stored in the memory 502 to realize various functions, in accordance with the following instructions: acquiring an address identifier of a video source supporting a certain format, where the video source includes video data in the format carrying a timestamp; acquiring, based on the address identifier, the video data in an ascending order of the timestamp carried in the video data; converting the video data from the format into a preset common video format to obtain the video data in the common video format; and inputting the video data in the common video format to a service device which has a requirement for an access to the video source.

Preferably, the method may further include sending a starting video transmission request to the service device, and inputting the video data in the common video format to the service device in an ascending order of the timestamp upon reception of a starting video response returned by the service device.

Preferably, the method may further include detecting an availability of the video source based on the address identifier, and sending a pausing video transmission notification to the service device in a case that it is detected that the video source is unavailable.

Preferably, the method may further include detecting an availability of the video source based on the address identifier, and reacquiring the video data in the video source based on the address identifier after a preset time duration in a case that it is detected that the video source is unavailable.

Preferably, an ending video transmission notification may be sent to the service device when an ending video transmission signal is received or after video data in the common video format in the video source which carries a maximum time stamp is inputted to the service device.

Correspondingly, a computer-readable storage media is further provided in an embodiment of the present disclosure. The computer-readable storage media has program instructions stored therein. The program instructions, when executed by a processor of a computing device, configure the computing device to: acquire an address identifier of a video source supporting a certain format, where the video source includes video data in the format carrying a timestamp; acquire, based on the address identifier, the video data in an ascending order of the timestamp carried in the video data; convert the video data from the format into a preset common video format to obtain the video data in the common video format; and input the video data in the common video format to a service device to achieve an access to the video source.

The video source access method and a device thereof according to the embodiments of the disclosure are introduced in detail above, the principles and implementing ways of the disclosure are clarified by specific examples, and the above illustration of the embodiments is only to help to understand the method and key idea of disclosure.

## Claims

1. A video source access method, comprising:
acquiring (S101) an address identifier of a video source supporting a certain format, wherein the video source comprises video data in a format carrying a timestamp;
acquiring (S102), based on the address identifier, the video data in an ascending order of the timestamp carried in the video data;
converting (S103) the video data from the format into a preset common video format to obtain the video data in the common video format; and
inputting (S104) the video data in the common video format to a service device to achieve an access to the video source, wherein the service device is configured to store and manage the video data in the common video format, and provide, when a content distribution network server receives a video request from a user, the video data in the common video format to the user via the content distribution network server.

2. The method according to claim 1, further comprising sending a starting video transmission request to the service device,
wherein the inputting the video data in the common video format to the service device comprises inputting the video data in the common video format to the service device in an ascending order of the timestamp upon reception of a starting video response returned by the service device.

3. The method according to claim 1, further comprising:
detecting an availability of the video source based on the address identifier; and
sending a pausing video transmission notification to the service device in a case that it is detected that the video source is unavailable.

4. The method according to claim 1, further comprising:
detecting an availability of the video source based on the address identifier; and
reacquiring the video data in the video source based on the address identifier after a preset time duration in a case that it is detected that the video source is unavailable.

5. The method according to claim 1, wherein an ending video transmission notification is sent to the service device when an ending video transmission signal is received or after video data in the common video format in the video source which carries a maximum time stamp is inputted to the service device.

6. The method according to claim 1, further comprising assigning a unique video identifier to the video source.

7. The method according to claim 1, further comprising setting a communication protocol, and inputting the video data in the common video format to the service device in accordance with the communication protocol.

8. The method according to claim 1, further comprising sending an acquiring video data request to the video source after the address identifier of the video source is obtained.

9. The method according to claim 1, further comprising separating audio data from the obtained video data, and inputting the audio data to an audio server.

10. The method according to claim 1, wherein the service device comprises at least one of a video server, a video transcoding server or a video confluence server.

11. A video source access device, comprising:
a first acquiring module (301) configured to acquire an address identifier of a video source supporting a certain format, wherein the video source comprises video data in a format carrying a timestamp;
a second acquiring module (302) configured to acquire, based on the address identifier, the video data in an ascending order of the timestamp carried in the video data;
a converting module (303) configured to convert the video data from the format into a preset common video format to obtain the video data in the common video format; and
an inputting module (304) configured to input the video data in the common video format to a service device to achieve an access to the video source, wherein the service device is configured to store and manage the video data in the common video format, and provide, when a content distribution network server receives a video request from a user, the video data in the common video format to the user via the content distribution network server.

12. The device according to claim 11, further comprising a first sending module configured to send a starting video transmission request to the service device,
wherein the inputting module (304) is further configured to input the video data in the common video format to the service device in an ascending order of the timestamp upon reception of a starting video response returned by the service device.

13. The device according to claim 11, further comprising:
a first detecting module configured to detect an availability of the video source based on the address identifier; and
a second sending module configured to send a pausing video transmission notification to the service device in a case that it is detected that the video source is unavailable.

14. The device according to claim 11, further comprising:
a second detecting module configured to detect an availability of the video source based on the address identifier; and
a third acquiring module configured to reacquire the video data in the video source based on the address identifier after a preset time duration in a case that it is detected that the video source is unavailable.

15. The device according to claim 11, further comprising:
a third sending module configured to send an ending video transmission notification to the service device when an ending video transmission signal is received or after video data in the common video format in the video source which carries a maximum time stamp is inputted to the service device.

## Patentansprüche

1. Videoquellenzugriffsverfahren, umfassend:
Erfassen (S101) eines Adressidentifikators einer Videoquelle, die ein bestimmtes Format unterstützt, wobei die Videoquelle Videodaten in einem Format umfasst, das einen Zeitstempel trägt;
Erfassen (S102), basierend auf dem Adressidentifikator, der Videodaten in einer aufsteigenden Reihenfolge des Zeitstempels, der in den Videodaten getragen wird;
Konvertieren (S103) der Videodaten von dem Format in ein voreingestelltes gängiges Videoformat, um die Videodaten in dem gängigen Videoformat zu erhalten; und
Eingeben (S104) der Videodaten in dem gängigen Videoformat in ein Dienstgerät, um einen Zugriff auf die Videoquelle zu erreichen, wobei das Dienstgerät konfiguriert ist, um die Videodaten in dem gängigen Videoformat zu speichern und zu verwalten, und, wenn ein Inhalteverteilnetzwerkserver eine Videoanforderung eines Benutzers erhält, dem Benutzer die Videodaten in dem gängigen Videoformat über den Inhalteverteilnetzwerkserver bereitzustellen.

2. Verfahren nach Anspruch 1, des Weiteren umfassend ein Senden einer Anforderung zum Starten einer Videoübertragung an das Dienstgerät,
wobei das Eingeben der Videodaten in dem gängigen Videoformat in das Dienstgerät ein Eingeben der Videodaten in dem gängigen Videoformat in das Dienstgerät in einer aufsteigenden Reihenfolge des Zeitstempels umfasst, auf den Empfang einer Antwort, dass das Video gestartet ist, hin, die durch das Dienstgerät zurückgegeben wird.

3. Verfahren nach Anspruch 1, des Weiteren umfassend:
Detektieren einer Verfügbarkeit der Videoquelle basierend auf dem Adressidentifikator; und
Senden einer Mitteilung zum Pausieren der Videoübertragung an das Dienstgerät in einem Fall, in dem detektiert wird, dass die Videoquelle nicht verfügbar ist.

4. Verfahren nach Anspruch 1, des Weiteren umfassend:
Detektieren einer Verfügbarkeit der Videoquelle basierend auf dem Adressidentifikator; und
Wiedererfassen der Videodaten in der Videoquelle basierend auf dem Adressidentifikator nach einer voreingestellten Zeitspanne in einem Fall, in dem detektiert wird, dass die Videoquelle nicht verfügbar ist.

5. Verfahren nach Anspruch 1, wobei eine Mitteilung über die Beendigung der Videoübertragung an das Dienstgerät gesendet wird, wenn ein Signal über die Beendigung der Videoübertragung empfangen wird oder nachdem Videodaten in dem gängigen Videoformat in der Videoquelle, die einen maximalen Zeitstempel tragen, in das Dienstgerät eingegeben werden.

6. Verfahren nach Anspruch 1, des Weiteren umfassend ein Zuweisen eines eindeutigen Videoidentifikators zu der Videoquelle.

7. Verfahren nach Anspruch 1, des Weiteren umfassend ein Einstellen eines Kommunikationsprotokolls und ein Eingeben der Videodaten in dem gängigen Videoformat in das Dienstgerät in Übereinstimmung mit dem Kommunikationsprotokoll.

8. Verfahren nach Anspruch 1, des Weiteren umfassend ein Senden einer Anforderung zum Erfassen von Videodaten an die Videoquelle, nachdem der Adressidentifikator der Videoquelle erhalten wird.

9. Verfahren nach Anspruch 1, des Weiteren umfassend ein Abspalten von Audiodaten von den erhaltenen Videodaten und ein Eingeben der Audiodaten in einen Audioserver.

10. Verfahren nach Anspruch 1, wobei das Dienstgerät zumindest eines von einem Videoserver, einem Videotranscodierungsserver oder einen Videokonfluenzserver, umfasst.

11. Videoquellenzugriffsgerät, umfassend:
ein erstes Erfassungsmodul (301), das konfiguriert ist, um einen Adressidentifikator einer Videoquelle, die ein bestimmtes Format unterstützt, zu erfassen, wobei die Videoquelle Videodaten in einem Format umfasst, das einen Zeitstempel trägt;
ein zweites Erfassungsmodul (302), das konfiguriert ist, um basierend auf dem Adressidentifikator die Videodaten in einer aufsteigenden Reihenfolge des Zeitstempels, der in den Videodaten getragen wird, zu erfassen;
ein Konvertierungsmodul (303), das konfiguriert ist, um die Videodaten von dem Format in ein voreingestelltes gängiges Videoformat zu konvertieren, um die Videodaten in dem gängigen Videoformat zu erhalten; und
ein Eingabemodul (304), das konfiguriert ist, um die Videodaten in dem gängigen Videoformat in ein Dienstgerät einzugeben, um einen Zugriff auf die Videoquelle zu erreichen, wobei das Dienstgerät konfiguriert ist, um die Videodaten in dem gängigen Videoformat zu speichern und zu verwalten, und, wenn ein Inhalteverteilnetzwerkserver eine Videoanforderung eines Benutzers erhält, dem Benutzer die Videodaten in dem gängigen Videoformat über den Inhalteverteilnetzwerkserver bereitzustellen.

12. Gerät nach Anspruch 11, des Weiteren umfassend ein erstes Sendemodul, das konfiguriert ist, um eine Anforderung zum Starten einer Videoübertragung an das Dienstgerät zu senden,
wobei das Eingabemodul (304) des Weiteren konfiguriert ist, um die Videodaten in dem gängigen Videoformat in das Dienstgerät in einer aufsteigenden Reihenfolge des Zeitstempels einzugeben, auf den Empfang einer Antwort, dass das Video gestartet ist, hin, die durch das Dienstgerät zurückgegeben wird.

13. Gerät nach Anspruch 11, des Weiteren umfassend:
ein erstes Detektionsmodul, das konfiguriert ist, um eine Verfügbarkeit der Videoquelle basierend auf dem Adressidentifikator zu detektieren; und
ein zweites Sendemodul, das konfiguriert ist, um eine Mitteilung zum Pausieren der Videoübertragung an das Dienstgerät zu senden, in einem Fall, in dem detektiert wird, dass die Videoquelle nicht verfügbar ist.

14. Gerät nach Anspruch 11, des Weiteren umfassend:
ein zweites Detektionsmodul, das konfiguriert ist, um eine Verfügbarkeit der Videoquelle basierend auf dem Adressidentifikator zu detektieren; und
ein drittes Erfassungsmodul, das konfiguriert ist, um die Videodaten in der Videoquelle basierend auf dem Adressidentifikator nach einer voreingestellten Zeitspanne wieder zu erfassen, in einem Fall, in dem detektiert wird, dass die Videoquelle nicht verfügbar ist.

15. Gerät nach Anspruch 11, des Weiteren umfassend:
ein drittes Sendemodul, das konfiguriert ist, um eine Mitteilung über die Beendigung der Videoübertragung an das Dienstgerät zu senden, wenn ein Signal über die Beendigung der Videoübertragung empfangen wird oder nachdem Videodaten in dem gängigen Videoformat in der Videoquelle, die einen maximalen Zeitstempel tragen, in das Dienstgerät eingegeben werden.

## Revendications

1. Procédé d'accès à une source vidéo, comprenant:
la saisie (S101) d'un identificateur d'adresses d'une source vidéo qui prend en charge un certain format, la source vidéo comprenant des données vidéo dans un format qui porte un horodatage;
la saisie (S102), basée sur l'identificateur d'adresses, des données vidéo dans une ordre croissant de l'horodatage qui est porté dans les données vidéo;
la conversion (S103) des données vidéo d'un format dans un format vidéo préréglé courant afin de recevoir les données vidéo dans le format vidéo courant; et
l'entrée (S104) des données vidéo dans le format vidéo courant dans un appareil de service afin d'obtenir un accès à la source vidéo, l'appareil de service étant configuré afin d'enregistrer et traiter les données vidéo dans le format vidéo courant, et lorsqu'un serveur réseau de distribution de contenus reçoit une demande de présentation vidéo d'un utilisateur, les données vidéo sont mises à disposition de l'utilisateur dans le format courant via le serveur réseau de distribution de contenus.

2. Procédé selon la revendication 1, comprenant en outre un envoi d'une demande pour lancer la transmission de la vidéo à l'appareil de service,
l'entrée des données vidéo dans le format courant dans l'appareil de service comprenant l'entrée des données vidéo dans le format courant dans l'appareil de service en un ordre croissant de l'horodatage, à la réception d'une réponse que la vidéo est lancée, réponse qui est retournée par l'appareil de service.

3. Procédé selon la revendication 1, comprenant en outre:
la détection d'une disponibilité de la source vidéo basée sur l'identificateur d'adresses; et
l'envoi d'une information sur l'interruption de la transmission de la vidéo à l'appareil de service au cas où il est détecté que la source vidéo n'est pas disponible.

4. Procédé selon la revendication 1, comprenant en outre:
la détection d'une disponibilité de la source vidéo basée sur l'identificateur d'adresses; et
la ressaisie des données vidéo dans la source vidéo basée sur l'identificateur d'adresse après une période préréglée au cas où il est détecté que la source vidéo n'est pas disponible.

5. Procédé selon la revendication 1, une information sur la fin de la transmission de la vidéo étant envoyée à l'appareil de service, lorsqu'un signal émis pour la fin de la transmission de la vidéo est reçu ou après que les données vidéo ont été saisies dans l'appareil de service dans le format vidéo courant dans la source vidéo qui porte un horodatage maximal.

6. Procédé selon la revendication 1, comprenant en outre une attribution d'un identificateur vidéo unique à la source vidéo.

7. Procédé selon la revendication 1, comprenant en outre un réglage d'un protocole de communication et une entrée des données vidéo dans le format vidéo courant dans l'appareil de service conformément au protocole de communication.

8. Procédé selon la revendication 1, comprenant en outre un envoi d'une demande de saisie de donnés vidéo à la source vidéo après que l'identificateur d'adresses de la source vidéo a été reçu.

9. Procédé selon la revendication 1, comprenant en outre une séparation de données audio des données vidéo obtenues et l'entrée des données audio dans un serveur audio.

10. Procédé selon la revendication 1, l'appareil de service comprenant au moins un d'un serveur, un serveur de transcodage vidéo ou un serveur confluence vidéo.

11. Dispositif d'accès à une source vidéo, comprenant:
un premier module de saisie (301), qui est configuré, afin de saisir un identificateur d'adresses d'une source vidéo qui prend en charge un certain format, la source vidéo comprenant des données vidéo dans un format qui porte un horodatage;
un deuxième module de saisie (302), qui est configuré, afin de saisir, sur la base de l'identificateur d'adresses, les données vidéo dans une ordre croissant de l'horodatage qui est porté dans les données vidéo;
un module de conversion (303), qui est configuré, afin de convertir les données vidéo d'un format à un format vidéo préréglé courant afin de recevoir les données vidéo dans le format vidéo courant; et
un module d'entrée (304), qui est configuré, afin d'entrer les données vidéo dans le format vidéo courant dans un appareil de service afin d'obtenir un accès à la source vidéo, l'appareil de service étant configuré afin d'enregistrer et traiter les données vidéo dans le format vidéo courant, et lorsqu'un serveur réseau de distribution de contenus reçoit une demande de présentation vidéo d'un utilisateur, les données vidéo sont mises à disposition de l'utilisateur dans le format courant via le serveur réseau de distribution de contenus.

12. Appareil selon la revendication 11, comprenant en outre un premier module d'envoi, qui est configuré, afin d'envoyer une demande pour lancer la transmission de la vidéo à l'appareil de service,
le module d'entrée (304) étant en outre configuré afin d'entrer les données vidéo dans le format courant dans l'appareil de service en un ordre croissant de l'horodatage, à la réception d'une réponse que la vidéo est lancée, réponse qui est retournée par l'appareil de service.

13. Appareil selon la revendication 11, comprenant en outre:
un premier module de détection, qui est configuré, afin de détecter une disponibilité de la source vidéo basée sur l'identificateur d'adresses; et
un deuxième module d'envoi, qui es configuré, afin d'envoyer une information sur l'interruption de la transmission de la vidéo à l'appareil de service au cas où il est détecté que la source vidéo n'est pas disponible.

14. Appareil selon la revendication 11, comprenant en outre:
un deuxième module de détection, qui est configuré, afin de détecter une disponibilité de la source vidéo basée sur l'identificateur d'adresses; et
un troisième module de saisie, qui est configuré, afin de ressaisir les données vidéo dans la source vidéo basée sur l'identificateur d'adresse après une période préréglée au cas où il est détecté que la source vidéo n'est pas disponible.

15. Appareil selon la revendication 11, comprenant en outre:
un troisième module d'envoi, qui est configuré, afin d'envoyer une information sur la fin de la transmission de la vidéo à l'appareil de service, lorsqu'un signal émis pour la fin de la transmission de la vidéo est reçu ou après que les données vidéo ont été saisies dans l'appareil de service dans le format vidéo courant dans la source vidéo qui porte un horodatage maximal.
